(19) Europäisches Patentamt
European Patent Office
Office européen des brevets

(11) Veröffentlichungsnummer: **0 009 760**
**B1**

(12) # EUROPÄISCHE PATENTSCHRIFT

(45) Veröffentlichungstag der Patentschrift: **16.06.82**

(21) Anmeldenummer: **79103645.2**

(22) Anmeldetag: **26.09.79**

(51) Int. Cl.³: **C 08 G 18/10**, C 08 G 18/32, D 06 M 15/52, C 03 C 25/00, C 09 D 3/72, C 09 J 3/16

(54) **Verfahren zur Herstellung von wässrigen Dispersionen oder Lösungen von Polyurethan-Polyharnstoffen sowie ihre Verwendung.**

(30) Priorität: **06.10.78 DE 2843790**

(43) Veröffentlichungstag der Anmeldung: **16.04.80 Patentblatt 80/8**

(45) Bekanntmachung des Hinweises auf die Patenterteilung: **16.06.82 Patentblatt 82/24**

(84) Benannte Vertragsstaaten: **AT BE DE FR GB IT NL SE**

(56) Entgegenhaltungen:
**EP-A-0 000 029**
**EP-A-0 004 069**
**FR-A-1 413 879**
**FR-A-1 535 415**

(73) Patentinhaber: **BAYER AG, Zentralbereich Patente, Marken und Lizenzen, D-5090 Leverkusen 1, Bayerwerk (DE)**

(72) Erfinder: **Wenzel, Wolfgang, Dr., Peter-Landwehr-Strasse 13, D-5060 Bergisch Gladbach 2 (DE)**
Erfinder: **Meckel, Walter, Dr., Zonser Strasse 9, D-4040 Neuss (DE)**

**EP 0 009 760 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von wässrigen Dispersionen oder Lösungen von Polyurethan-Polyharnstoffen sowie ihre Verwendung

Die vorliegende Erfindung betrifft ein neues Verfahren zur Herstellung von wässrigen Dispersionen oder Lösungen von Polyurethan-Polyharnstoffen durch Umsetzung von hydrophil-modifizierten und/oder externe Emulgatoren enthaltenden NCO-Präpolymeren mit organischen Polyaminen und/oder Hydrazinen in wässriger Phase, wobei die genannten Kettenverlängerungsmittel vor der Herstellung der Dispersion bzw. Lösung in Form ihrer festen Addukte mit anorganischen oder organischen Säuren mit den NCO-Präpolymeren zu einer Suspension vermischt werden, sowie die Verwendung der Dispersionen bzw. Lösungen zur Herstellung von Überzügen, Beschichtungen oder Verklebungen.

Die Herstellung von stabilen, wässrigen Polyurethan-Polyharnstoff-Dispersionen gehört zum bekannten Stand der Technik [z.B. DE-A-1 495 745, DE-A-1 770 068, DE-A-2 555 534, DE-A-2 446 440, DE-A-2 543 091, US-A-3 479 310, US-A-3 756 992, US-A-4 108 814 oder auch D. Dieterich et al., Angew. Chem. 82, 53 (1970)].

Dabei ist zu unterscheiden zwischen Verfahren, die auf die Mitverwendung von Lösungsmitteln angewiesen sind, und sog. lösungsmittelfreien Herstellungsverfahren.

Im ersteren Falle werden hochmolekulare Polyurethane durch Polyaddition in organischer Lösung, also in homogener Phase, aufgebaut, bevor sie in Wasser dispergiert werden. Dieses Verfahren liefert besonders hochwertige Polyurethanfilme, die auch dem Werteniveau der Textilbeschichtung genügen.

Nachteil dieses Verfahrens ist die schlechte Raum/Zeit-Ausbeute bedingt durch die grosse Menge des notwendigen Lösungsmittels, das zudem auch nach der Destillation noch rektifiziert werden muss.

Das organische Lösungsmittel erhöht zusätzlich die Explosions- und Brandgefahr in den Produktionsanlagen.

Unter den lösungsmittelfreien Verfahren sind insbesondere zwei zu nennen, das sogenannte Schmelzdispersierverfahren, das in der DE-A-1 770 068 bzw. US-A-3 756 992 beschrieben wird; und das in der DE-A-2 446 440 bzw. US-A-4 108 814 beschriebene Verfahren, bei dem ein Sulfonat- und NCO-Gruppen aufweisendes Präpolymer mit einem Diamin während oder nach dem Dispergiervorgang unter Kettenverlängerung umgesetzt wird.

Während das Schmelzdispergierverfahren vernetzte Polyurethane ergibt, deren Eigenschaftsniveau für viele Gebiete wie z.B. die Textilbeschichtung häufig nicht ausreicht, resultieren aus dem in der DE-A-2 446 440 beschriebenen Verfahren teilweise inhomogene Polyurethanharnstoffteilchen, die dann zu Filmen mit unzureichender mechanischer Festigkeit und teilweise mangelhafter Hydrolysebeständigkeit führen können. Die Ursache für die Inhomogenität der Polyurethanharnstoffe liegt in der Verfahrensweise der DE-OS-2 446 440, bei der nicht gewährleistet ist, dass das Diamin vor der Kettenverlängerung homogen im NCO-Gruppen-haltigen Präpolymer verteilt ist.

Aufgabe der vorliegenden Erfindung war es daher, ein lösungsmittelfreies bzw. lösungsmittelarmes Verfahren anzubieten, das die Herstellung von Polyurethan(harnstoff)en in wässriger Phase mit verbesserten Eigenschaften erlaubt, wobei die Verbesserung besonders dadurch erreicht werden sollte, dass der im flüssigen wässrigen Medium verteilte hochmolekulare Festkörper durch Polyaddition in möglichst homogener Phase erhalten wird.

Durch das nachstehend näher beschriebene erfindungsgemässe Verfahren konnte diese Aufgabe gelöst werden.

Gegenstand der vorliegenden Erfindung ist ein Verfahren zur Herstellung von wässrigen Dispersionen oder Lösungen von Polyurethan-Polyharnstoffen durch Umsetzung von chemisch eingebaute hydrophile Gruppierungen und/oder externe, nichtchemisch gebundene Emulgatoren enthaltenden, mindestens zwei freie Isocyanatgruppen aufweisenden Präpolymeren mit Kettenverlängerungsmitteln in wässriger Phase, dadurch gekennzeichnet, dass man

a) flüssige oder in in inerten Lösungsmitteln gelöster Form vorliegende, hydrophil modifizierte und/oder externe Emulgatoren enthaltende, Isocyanatgruppen aufweisende Präpolymere in Abwesenheit von Wasser mit

b) festen, in den Präpolymeren bzw. deren Lösungen unlöslichen Addukten, die einen über dem Schmelzpunkt der Präpolymeren oder deren Lösung liegenden Schmelzpunkt aufweisen, von

ba) mindestens zwei primäre und/oder sekundäre Aminogruppen aufweisenden Aminen und/oder Hydrazinen, welche an beiden Stickstoffatomen mindestens ein Wasserstoffatom aufweisen und

bb) anorganischen oder organischen Säuren bei einer Temperatur unterhalb des Schmelzpunkts des Adduktes b) zu einer Suspension vermischt, und anschliessend diese Suspension mit Wasser oder mit wasserhaltigen flüssigen Systemen vermischt.

Gegenstand der vorliegenden Erfindung ist auch die Verwendung der nach diesem Verfahren hergestellten Dispersionen oder Lösungen zur Herstellung von Überzügen, Beschichtungen oder Verklebungen flexibler und nichtflexibler Substrate.

Ausgangsmaterialien für das erfindungsgemässe Verfahren sind a) mindestens 2 endständige Isocyanatgruppen aufweisende NCO-Präpolymere. Vorzugsweise werden difunktionelle NCO-Präpolymere eingesetzt. Vorzugsweise handelt es sich bei den beim erfindungsgemässen Verfahren einzusetzenden NCO-Präpolymeren um solche, welche eine oder mehrere ihre Löslichkeit bzw. Dispergierbarkeit in Wasser bedingende hydrophile Gruppierung(en) aufweisen. Es ist jedoch

auch möglich, beim erfindungsgemässen Verfahren an sich hydrophobe NCO-Präpolymere einzusetzen, falls für ihre Löslichkeit bzw. Dispergierbarkeit in Wasser durch Mitverwendung von externen Emulgatoren Sorge getragen wird. Selbstverständlich ist es auch denkbar, die Hydrophilie von eingebaute hydrophile Gruppen enthaltenden NCO-Präpolymeren durch zusätzliche Mitverwendung von externen Emulgatoren zu erhöhen.

Zur Durchführung des erfindungsgemässen Verfahrens sind alle NCO-Präpolymeren geeignet, die bislang bereits bei der Herstellung von wässrigen Polyurethan-Dispersionen oder -Lösungen zum Einsatz gelangten. Ihre Herstellung erfolgt nach bekannten Verfahren des Standes der Technik und ist beispielsweise in den obengenannten Literaturstellen betreffend die Herstellung von wässrigen Polyurethandispersionen beschrieben. Anstelle der in diesen Literaturstellen genannten hydrophil modifizierten NCO-Präpolymeren können, wie bereits ausgeführt, beim erfindungsgemässen Verfahren auch einfache, nichtionisch modifizierte NCO-Präpolymere eingesetzt werden, soweit für ihre Dispergierbarkeit bzw. Löslichkeit in Wasser durch Mitverwendung geeigneter Dispersionshilfsmittel gesorgt wird.

Ausgangsmaterialien zur Herstellung der NCO-Präpolymeren sind demzufolge:

1. Beliebige organische Polyisocyanate, vorzugsweise Diisocyanate der Formel

$$Q\ (NCO)_n$$

in welcher

n 2 oder 3, vorzugsweise 2, und

Q einen gesättigten aliphatischen Kohlenwasserstoffrest mit 2–18, vorzugsweise 6–10 C-Atomen, einen gesättigten cycloaliphatischen Kohlenwasserstoffrest mit 4–15, vorzugsweise 6–10 C-Atomen, einen aromatischen Kohlenwasserstoffrest mit 6–15, vorzugsweise 6–13 C-Atomen, oder einen araliphatischen Kohlenwasserstoffrest mit 8–15, vorzugsweise 8–13 C-Atomen, bedeuten, wobei zwischen den NCO-Gruppen jeweils mindestens 2 C-Atome angeordnet sind.

Beispiele für gut geeignete Polyisocyanate, insbesondere Diisocyanate, sind Tetramethylendiisocyanat, Hexamethylendiisocyanat, Dodecamethylendiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (IPDI), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenyl-methan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Selbstverständlich können auch beliebige Gemische dieser Isocyanate eingesetzt werden. Es können auch geringe Anteile an Mono- und Triisocyanaten mitverwandt werden. Selbstverständlich ist es auch möglich, beim erfindungsgemässen Verfahren die in der Polyurethan-Chemie an sich bekannten modifizierten, beispielsweise Carbodiimidgruppen, Allophanatgruppen, Isocyanuratgruppen, Urethangruppen und/oder Biuretgruppen aufweisenden Polyisocyanate (mit)-zuverwenden, obwohl dies nicht bevorzugt ist.

Bevorzugte Polyisocyanate sind Hexamethylendiisocyanat, 1-Isocyanato-3,3,5-trimethyl-5-isocyanatomethyl-cyclohexan, Diphenylmethan-4,4'-diisocyanat, 2,4- und 2,6-Toluylendiisocyanat, sowie deren Gemische.

2. Beliebige organische Verbindungen mit mindestens zwei gegenüber Isocyanatgruppen reaktionsfähigen Gruppen, insbesondere insgesamt zwei Aminogruppen, Thiolgruppen, Carboxylgruppen und/oder Hydroxylgruppen aufweisende organische Verbindungen des Molekulargewichtsbereichs 61 bis 10 000, vorzugsweise 300 bis 4000. Bevorzugt werden die entsprechenden Dihydroxyverbindungen eingesetzt. Die Mitverwendung von im Sinne der Isocyanat-Polyadditionsreaktion tri- oder höherfunktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyäther, Hydroxypolythioäther, Hydroxypolyacetale, Hydroxypolycarbonate und/oder Hydroxypolyesteramide. Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol-(1,4-bis-hydroxymethylcyclohexan), 2-Methyl-

1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycarbonsäure, sind einsetzbar.

Auch die erfindungsgemäss in Frage kommenden, vorzugsweise zwei Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole und Amine, z.B. Wasser, Äthylenglykol, Propylenglykol-(1,3) oder -(1,2), 4,4'-Dihydroxy-diphenylpropan, Anilin, hergestellt.

Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695, deutsche Patentschrift 1 152 536), sind ebenfalls geeignet. Die anteilig gegebenenfalls mitzuverwendenden höherfunktionellen Polyäther entstehen in analoger Weise durch an sich bekannte Alkoxylierung von höherfunktionellen Startermolekülen z.B. Ammoniak, Äthanolamin, Äthylendiamin oder Sukrose.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischäther, Polythioätherester, Polythioätheresteramide.

Als Polyacetale kommen z.B. die aus Glykolen, wie Diäthylenglykol, Triäthylenglykol, 4,4'-Diäthoxy-diphenyldimethylmethan, Hexandiol und Formaldehyd herstellbaren Verbindungen in Frage. Auch durch Polymerisation cyclischer Acetale lassen sich erfindungsgemäss geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Auch niedermolekulare Polyole können (mit)-verwendet werden, wie z.B. Äthandiol, Propandiol-1,2 und -1,3, Butandiol-1,4 und -1,3, Pentandiole, Hexandiole, Trimethylolpropan, Hexantriole, Glycerin und Pentaerythrit. In geringen Mengen können auch monofunktionelle Alkohole mitverwendet werden, wie z.B. Stearylalkohol.

Vertreter der genannten im erfindungsgemässen Verfahren zu verwendenden Polyisocyanat- und Hydroxy-Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben.

3. Chemisch fixierte hydrophile Gruppen aufweisende, vorzugsweise im Sinne der Isocyanat-Additionsreaktionen mono- und insbesondere difunktionelle Aufbaukomponenten der beispielhaft in den obengenannten Literaturstellen bezüglich der Herstellung von wässrigen Polyurethandispersionen oder -lösungen beschriebenen Art, d.h. beispielsweise ionische bzw. potentielle ionische Gruppen aufweisende Diisocyanate, Diamine oder Dihydroxyverbindungen bzw. Polyäthylenoxid-Einheiten aufweisende Diisocyanate oder Glykole. Zu den bevorzugten hydrophil modifizierten Aufbaukomponenten gehören insbesondere die Sulfonatgruppen aufweisenden aliphatischen Diole gemäss DE-A-2 446 440, die kationischen oder auch anionischen einbaufähigen inneren Emulgatoren gemäss DE-A-2 651 506 und auch die in dieser Druckschrift beschriebenen, monofunktionellen einbaufähigen Polyäther. Bei der Herstellung der NCO-Präpolymeren nach an sich bekannten Prinzipien des Standes der Technik werden die Reaktionspartner im allgemeinen in solchen Mengenverhältnissen eingesetzt, die einem Äquivalentverhältnis von Isocyanatgruppen zu gegenüber NCO-reaktiven Wasserstoffatomen, vorzugsweise aus Hydroxylgruppen, von 1,05 bis 10, vorzugsweise von 1,1 bis 3, entsprechen.

Die Reihenfolge der Zugabe der einzelnen Reaktionspartner ist hierbei weitgehend beliebig. Man kann sowohl die Hydroxylverbindungen abmischen und dazu das Polyisocyanat zufügen oder auch zur Polyisocyanatkomponente das Gemisch der Hydroxylverbindungen oder die einzelnen Hydroxylverbindungen nach und nach eintragen.

Die Herstellung der NCO-Präpolymere erfolgt vorzugsweise in der Schmelze bei 30 bis 190 °C, vorzugsweise bei 50 bis 120 °C. Die Herstellung der Präpolymere kann selbstverständlich auch in Gegenwart von organischen Lösungsmitteln erfolgen, obwohl einer der Hauptvorteile des erfindungsgemässen Verfahrens gerade in dem möglichen Verzicht auf derartige Lösungsmittel zu sehen ist. Geeignete Lösungsmittel, die z. B. zur Viskositätserniedrigung besonders hochschmelzender Präpolymerer in Mengen bis zu 30 Gew.-%, bezogen auf Feststoff, eingesetzt werden können, wären z. B. Aceton, Methyläthylketon, Essigsäureäthylester, Dimethylformamid oder Cyclohexanon.

Die Art und Mengenverhältnisse der bei der Herstellung der NCO-Präpolymeren eingesetzten Ausgangsmaterialien werden im übrigen vorzugsweise so gewählt, dass die NCO-Präpolymeren

a) eine mittlere NCO-Funktionalität von 1,8 bis 2,2, vorzugsweise 2,

b) einen Gehalt an kationischen oder anionischen eingebauten Gruppen von 0 bis 200, vorzugsweise 0,1 bis 100 und insbesondere 0,5 bis 50 Milli-Äquivalent pro 100 g Feststoff,

c) einen Gehalt an seitenständig, endständig und/oder innerhalb der Hauptkette eingebauten, innerhalb eines Polyäthersegments vorliegenden Äthylenoxid-Einheiten von 0 bis 30, vorzugsweise 0,5 bis 30 und insbesondere 1 bis 20 Gew.-%, bezogen auf das Gesamtgewicht des Präpolymeren und

d) ein mittleres Molekulargewicht von 500 bis 20 000, vorzugsweise 800 bis 9000, aufweisen.

Zu den bevorzugten NCO-Präpolymeren gehören, wie bereits dargelegt, solche, welche entweder ionische Gruppen der unter b) genannten Art, d.h. insbesondere $-COO^-$, $-SO_3^-$ oder $=N^+=$, oder nichtionische Gruppen der unter c) genannten Art oder sowohl ionische als auch nichtionische Gruppen der genannten Art aufweisen. Es ist jedoch auch möglich, beim erfindungsgemässen Verfahren NCO-Präpolymere einzusetzen, bei deren Herstellung keine der unter 3. genannten hydrophilen Aufbaukomponenten mitverwendet wurden, bei denen der Gehalt der oben unter b) bzw. c) genannten Gruppen somit 0 beträgt. Im Falle der Verwendung derartiger NCO-Präpolymerer, die im übrigen auch die oben unter a) und d) genannten Eigenschaften aufweisen, ist bei der Durchführung des erfindungsgemässen Verfahrens die Mitverwendung von externen Emulgatoren unerlässlich. Geeignete derartige Emulgatoren sind beispielsweise von R. Heusch in «Emulsionen», Ullmann, Band 10, Seiten 449–473, Weinheim 1975, beschrieben. Geeignet sind sowohl ionische Emulgatoren wie z.B. Alkali- und Ammoniumsalze von langkettigen Fettsäuren oder langkettigen Aryl(Alkyl)sulfonsäuren, als auch nichtionische Emulgatoren wie z.B. äthoxylierte Alkylbenzole mit einem mittleren Molgewicht von 500 bis 10 000.

Diese externen Emulgatoren werden vor der Durchführung des erfindungsgemässen Verfahrens mit den NCO-Präpolymeren innig durchmischt. Sie gelangen im allgemeinen in Mengen von 1 bis 30, vorzugsweise 5 bis 20 Gew.-%, bezogen auf das Gewicht des NCO-Präpolymeren zum Einsatz. Es ist durchaus möglich, auch bei Verwendung von hydrophil modifizierten NCO-Präpolymeren, deren Hydrophilie durch zusätzliche Mitverwendung derartiger externer Emulgatoren zu erhöhen, obwohl dies im allgemeinen nicht erforderlich ist.

Neben den NCO-Präpolymeren a) werden beim erfindungsgemässen Verfahren Addukte b) eingesetzt, welche unter dem Einfluss von Wasser dissoziieren und Amine oder Hydrazine freisetzen. Diese Addukte stellen feste Substanzen dar, die in der Regel einen oberhalb 30 °C liegenden Schmelzpunkt aufweisen. Eine obere Schmelzpunktgrenze ist für die Durchführbarkeit des erfindungsgemässen Verfahrens unwesentlich. In der Regel liegen die Schmelzpunkte jedoch nicht oberhalb 300 °C. Erfindungswesentlich ist lediglich die Bedingung, dass der Schmelzpunkt des Addukts über der Temperatur der zu verlängernden NCO-Präpolymeren bzw. seiner Lösung liegt, um die Herstellung einer heterogenen Suspension des Addukts im Präpolymeren bzw. seiner Lösung zu gewährleisten. Aus dem gleichen Grund darf die Homogenisierung der Suspension des Addukts im Präpolymeren bzw. dessen Lösung nicht durch thermischen Einfluss erfolgen, da in solchen Fällen eine sofortige Vernetzung des Präpolymeren eintreten würde, was eine Dispergierung bzw. Lösung in Wasser unmöglich macht.

Bei den Addukten b) handelt es sich entweder um Salze der nachstehend beispielhaft genannten Amine bzw. Hydrazine mit den nachstehend beispielhaft genannten anorganischen oder organischen Säuren oder um Anlagerungsprodukte von Kohlendioxid (Carbamate) an die Amine bzw. Hydrazine.

Ausgangskomponenten für die Herstellung der Addukte b) sind

ba) beliebige organische Amine mit mindestens zwei primären und/oder sekundären Aminogruppen bzw. beliebige Hydrazine, welche an beiden Stickstoffatomen mindestens ein Wasserstoffatom aufweisen und

bb) beliebige anorganische oder organische Säuren, die mit der Komponente ba) feste, im allgemeinen salzartige, Addukte bilden.

Zu den bevorzugten Aminen ba) gehören solche der Formel

$$A\,(NHB)_2$$

in welcher

A für einen gesättigten aliphatischen Kohlenwasserstoffrest mit 2 bis 12 vorzugsweise 2 bis 6 Kohlenstoffatomen, einen gesättigten cycloaliphatischen Kohlenwasserstoffrest mit 4 bis 15, vorzugsweise 6 bis 10 Kohlenstoffatomen, einen aromatischen Kohlenwasserstoffrest mit 6 bis 15 vorzugsweise 6 bis 13 Kohlenstoffatomen oder einen araliphatischen Kohlenwasserstoffrest mit 7 bis 13 Kohlenstoffatomen steht, wobei zwischen den beiden Aminogruppen mindestens zwei Kohlenstoffatome angeordnet sind, und

B für Wasserstoff oder einen Alkylrest mit 1 bis 18 Kohlenstoffatomen vorzugsweise für Wasserstoff steht.

Besonders bevorzugt sind die entsprechenden wasserlöslichen Amine. Handelt es sich um nicht wasserlösliche Amine, die einen Schmelzpunkt haben, der über der Temperatur des Dispergiervorgangs liegt, so sollte dem Präpolymer, wenn

möglich, ein wassermischbares Lösungsmittel zugesetzt werden, in dem die Amine löslich sind, oder der Dispergiervorgang oberhalb des Aminschmelzpunkts durchgeführt werden.

Beispiele besonders bevorzugter Amine sind Äthylendiamin, 1,2-Propylendiamin, 1,3-Propylendiamin, Hexamethylendiamin, 1-Amino-3,3,5-trimethyl-aminomethyl-cyclohexan (IPDA), 1,4-Diaminocyclohexan, 4,4'-Diaminodicyclohexylmethan, 2,4- und 2,6-Toluylendiamin und deren Gemische oder 4,4'-Diaminodiphenylmethan, bzw. beliebige Gemische derartiger Amine.

Selbstverständlich können auch modifizierte Amine wie z.B. N-Methyl-diäthylentriamin oder Äthylen-diamino-2-äthan-sulfonsaures Natrium eingesetzt werden.

Anstelle oder neben den genannten Aminen können als Komponente ba) auch mindestens zwei N–H–Gruppen aufweisende Hydrazine wie z.B. Hydrazin, Methylhydrazin, Dodecylhydrazin, N,N'-Dimethylhydrazin bzw. Dihydrate derartiger Hydrazine eingesetzt werden.

Bei der Komponente bb) handelt es sich vorzugsweise um anorganische oder organische Säuren des Molekulargewichtsbereichs 44–300, die bevorzugt di- oder mehrbasisch sind, wie beispielsweise Phosphorsäure, Kohlensäure in Form von Kohlendioxid, Weinsäure oder Oxalsäure. Besonders bevorzugt wird Kohlendioxid, welches mit den Aminen zu den entsprechenden festen Carbamaten abreagiert, als Komponente bb) eingesetzt. Sehr gut geeignet sind neben Kohlendioxid auch solche Säuren, die bei der Verwendung der erfindungsgemässen Dispersionen oder Lösungen zur Herstellung von Überzügen, Beschichtungen oder Verklebungen nach Entfernung des Wassers bei den bei der Verwendung üblichen Temperaturen im Temperaturbereich von 20 bis 200 °C, vorzugsweise 50 bis 150 °C ohne Abspaltung korrodierend wirkender Substanzen ihren Säurecharakter verlieren. Derartige Säuren sind beispielsweise in der DE-A-2 827 156 beschrieben.

Die Herstellung der Addukte b) erfolgt in an sich bekannter Weise durch Umsetzung der Reaktionspartner ba) und bb) vorzugsweise bei Raumtemperatur, wobei für jedes Aminäquivalent der Komponente ba) mindestens 0,5, vorzugsweise 1 bis 1,2 Säureäquivalente der Komponente bb) zum Einsatz gelangen. Die Umsetzung kann in Substanz, beispielsweise durch Einleiten von Kohlendioxid in flüssiges Diamin oder unter Zuhilfenahme von Lösungsmitteln, insbesondere von wassermischbaren Lösungsmitteln erfolgen, die sowohl gegenüber Isocyanaten inert als auch reaktiv sein können. Geeignete Lösungsmittel sind beispielsweise einfache Ketone oder Alkohole wie z.B. Aceton, Methyläthylketon, Methanol, Äthanol oder Äthylenglykol. Derartige Lösungsmittel werden insbesondere eingesetzt, wenn geringe Mengen von Wasser in dem Reaktionsgemisch vorliegen, wie z.B. in Falle des Hydrazinhydrats. Im allgemeinen sind die Ausgangskomponenten ba) und bb) in den genannten Lösungsmitteln löslich, nicht jedoch das aus ihnen gebildete Addukt. Hierdurch wird eine Abtrennung des Addukts durch einfache Filtration ermöglicht. Im Falle der Verwendung von gegenüber Isocyanatgruppen monofunktionellen Lösungsmitteln wie z.B. von Methanol oder Äthanol ist es besonders vorteilhaft, das Lösungsmittel durch intensives Trocknen des Addukts zu entfernen. Besonders interessant für die technische Herstellung der Salze ist die Verwendung von gegenüber Isocyanatgruppen höherfunktionellen, insbesondere difunktionellen Lösungsmitteln wie z.B. von Äthylenglykol, da in einem solchen Falle ein quantitatives Entfernen des Lösungsmittels nicht unbedingt erforderlich ist und häufig ein einfaches Absaugen des ausgefallenen Addukts aus der Lösungsmittel-Suspension ausreicht. Das in dem Filterkuchen verbleibende Lösungsmittel kann durch geeignete Wahl der Reaktionsbedingungen auch als Reaktionspartner dienen. In einigen Fällen kann es sogar vorteilhaft sein, die Salze in gegenüber Isocyanatgruppen reaktiven Verbindungen wie z.B. Butandiol aufgeschlämmt dem Präpolymer zuzusetzen, wobei jedoch in einem solchen Falle stets ein Überschuss von Isocyanatgruppen des Präpolymeren gegenüber den Hydroxylgruppen des Lösungsmittels vorliegen muss.

Bei der geschilderten Herstellung der Addukte b) werden bei Verwendung der besonders bevorzugten flüssigen Diamine stets feste Addukte erhalten, in welchen pro Äquivalent an Aminogruppen mindestens 0,5, vorzugsweise mindestens 1, Säureäquivalent salzartig, im Falle der Verwendung des Kohlendioxids als Carbamat gebunden, vorliegen. Die Addukte müssen keineswegs neutral sein. Vielmehr können auch basische oder saure Addukte zum Einsatz gelangen, wobei den sauren Addukten der Vorzug zu geben ist, da basische Verbindungen leicht als Trimerisierungskatalysator für die Isocyanatgruppen wirken können, wenn auch diese Gefahr in heterogenen Systemen relativ gering ist. Saure Salze entstehen bei der Herstellung der Addukte dann, wenn beispielsweise als Komponente bb) eine mehrbasische Säure wie z.B. Phosphorsäure in einer solchen Menge zum Einsatz gelangt, dass nur eine Teilneutralisation (1. Neutralisationsstufe) der Phosphorsäure durch die Komponente ba) erfolgt.

Zur Durchführung des erfindungsgemässen Verfahrens werden die in der Pulverform vorliegenden Addukte b) in dem NCO-Präpolymeren suspendiert. Dabei kann das Präpolymer neben den bereits genannten externen Emulgatoren weitere Hilfsmittel wie insbesondere Lösungsmittel, Farbstoffe, Verlaufmittel und andere Modifizierungskomponenten enthalten. Diese Hilfsmittel und insbesondere auch andere, mit den erfindungsgemässen Dispersionen oder Lösungen verträgliche Kunststoffdispersionen oder -lösungen können den erfindungsgemässen Dispersionen auch nach ihrer Herstellung zugegeben werden. Grundsätzlich denkbar ist auch die Mitverwendung von anderen «blockierten» Aminen bzw. Hydrazinen, die unter dem Einfluss von Wasser freie Amine bzw. Hydrazine bilden. Derartige

«blockierte» Amine bzw. Hydrazine sind beispielsweise in den DE-A-2 725 589, 2 732 131 oder 2 811 148 beschrieben. Auch die Verwendung von «gemischtblockierten» Polyaminen, die nach verschiedenen Chemismen blockiert sind, ist möglich; z. B. können Carbamate von Hydrazonen eingesetzt werden.

Zur Herstellung der Suspensionen werden vorzugsweise lösungsmittelfreie, flüssige NCO-Präpolymere eingesetzt. Im Falle der Verwendung von besonders hochschmelzenden NCO-Präpolymeren ist es selbstverständlich möglich, zur Viskositätserniedrigung organische Lösungsmittel zuzusetzen, wie z. B. Aceton, Methyläthylketon, Essigsäureäthylester, Dimethylformamid oder Cyclohexanon. Es muss jedoch nur so viel Lösungsmittel verwandt werden, wie zur Gewährleistung einer ausreichenden Rührbarkeit des NCO-Präpolymeren nötig ist und nicht, wie bei den früheren Verfahren der Herstellung von Polyurethandispersionen, zur homogenen Auflösung des kettenverlängerten Polyurethans. Im allgemeinen genügen hier Lösungsmittelmengen bis zu 30 Gew.-% bezogen auf den Feststoff des Präpolymeren.

Die Herstellung der Suspension erfolgt im allgemeinen im Temperaturbereich von −20 bis 150 °C, vorzugsweise von 30 bis 90 °C mit der einzigen Einschränkung, dass die Temperatur stets so gewählt werden muss, dass ein heterogenes System vorliegt. Es muss daher stets unterhalb des Schmelzpunkts des Addukts b) gearbeitet werden.

Bei der Herstellung der Suspensionen werden die Reaktionspartner a) und b) in solchen Mengenverhältnissen miteinander vermischt, dass das Äquivalentverhältnis (NCO-Gruppen des Präpolymeren): (freie + unter Adduktbildung blokkierte –NH–Gruppen) zwischen 4 : 1 und 1 : 2, vorzugsweise zwischen 2 : 1 und 1 : 1,25 und insbesondere zwischen 1,3 : 1 und 1 : 1,2, liegt. Im Falle der prinzipiellen möglichen, jedoch keineswegs bevorzugten Mitverwendung von anderen «blokkierten» Aminen bzw. Hydrazinen ist die Menge der erfindungswesentlichen Komponente b) entsprechend zu reduzieren, so dass das Gesamtverhältnis der Isocyanatgruppen zu den zumindest teilweise blockierten Aminogruppen innerhalb der genannten Bereiche liegt. Die so hergestellte Suspension ist unter Normalbedingungen über einen längeren Zeitraum, d. h. während mehr als einer Stunde weitgehend stabil. Bei Temperaturen, die erheblich unter dem Schmelzpunkt des Addukts b) liegen, kann die Lagerstabilität der Suspension mehrere Tage betragen.

Der nächste Schritt des erfindungsgemässen Verfahrens besteht nun im Vermischen der so erhaltenen Suspension mit Wasser oder beliebigen wasserhaltigen flüssigen Systemen. Dieser Schritt erfolgt im allgemeinen im Temperaturbereich von 10 bis 150 °C, vorzugsweise von 40 bis 90 °C unter Verwendung der üblichen Mischaggregate wie z. B. Rührer, Kreiselhomogenisiermaschinen, Ultraschalldispergiermaschinen oder Schneckenmaschinen. Bei Temperaturen oberhalb 100 °C erfolgt die Durchmischung unter Druck. Anstelle von reinem Wasser können auch wässrige Systeme eingesetzt werden, die die oben beispielhaft genannten Hilfs- und Zusatzstoffe bereits enthalten. Es ist auch möglich wässrige Lösungen von freien aminischen Kettenverlängerungsmitteln einzusetzen, wie dies beispielsweise in der DE-A-2 446 440 beschrieben ist. Derartige aminische Kettenverlängerungsmittel werden jedoch, falls überhaupt, lediglich in untergeordneten Mengen eingesetzt.

Beim Vermischen der Suspension mit dem wässrigen Medium bzw. Wasser tritt schnell eine Homogenisierung des heterogenen Gemischs auf, indem durch Dissoziation des Addukts b) das entsprechende Amin bzw. Hydrazin ba) freigesetzt wird und mit dem NCO-Präpolymer in wässriger Phase unter Kettenverlängerung abreagiert, während die Säure bb) die wässrige Phase in Form von gasförmigem Kohlendioxid verlässt oder sich im Wasser löst. Im Falle der Herstellung von kationisch hydrophil modifizierten Polyurethandispersionen oder Lösungen kann die freigesetzte Säure auch zur Neutralisation von im NCO-Präpolymer eingebautem tert. Stickstoff unter Ausbildung von die Dispergierbarkeit des sich gleichzeitig bildenden hochmolekularen Polyurethans bewirkenden kationischen Gruppen dienen. In einem solchen Falle würde es sich im Extremfall erübrigen, hydrophil modifizierte bzw. externe Emulgatoren enthaltende NCO-Präpolymere einzusetzen, da die hydrophile Gruppierung in situ gebildet wird.

In manchen Fällen erweist sich die Dissoziationsbereitschaft der Addukte b) in Wasser als relativ schwach. In solchen Fällen (beispielsweise bei Verwendung von Hydrazincarbamat, das sich relativ langsam unter Kohlendioxidabspaltung in Wasser löst, kann durch Zusatz geringer Mengen von stärkeren Säuren als der im Addukt vorliegenden Säure bb) zum Wasser bzw. wässrigen Milieu die Dissoziation des Addukts beschleunigt werden. So genügt beispielsweise bei Verwendung von Hydrazincarbamat als Addukt b) der Zusatz von wenigen Promille Phosphorsäure zum Dispergierwasser, um die Dissoziation des Addukts ausreichend zu beschleunigen.

Die Frage, ob beim erfindungsgemässen Verfahren Lösungen oder Dispersionen der Polyurethane bzw. Polyurethan-Polyharnstoffe in Wasser erhalten werden, ist vor allem vom Molekulargewicht und der Hydrophilie der gelösten bzw. dispergierten Teilchen abhängig, welche ihrerseits durch geeignete Wahl der Art und Mengenverhältnisse der Ausgangsmaterialien, insbesondere bei der Herstellung der NCO-Präpolymeren a) nach den bekannten Prinzipien der Polyurethanchemie eingestellt werden können. So führt beispielsweise die Verwendung von einem NCO-Präpolymeren mit einer geringfügig unter 2 liegenden mittleren NCO-Funktionalität zu einem Abbruch der Polyadditionsreaktion, bevor allzu hohe Molekulargewichte erreicht sind.

Der Feststoffgehalt der Dispersionen bzw. Lösungen liegt in der Regel zwischen 5 und 60, vorzugsweise zwischen 25 und 50 Gew.-%. Die Dispersionen bzw. Lösungen lassen sich mit Wasser auch zu einem späteren Zeitpunkt beliebig verdünnen.

Die Dispersionen sind in der Regel über mehrere Wochen sedimentationsstabil. Die Teilchengrösse des Feststoffes liegt unter 500 nm, bevorzugt unter 300 nm. Im Falle von wässrigen Lösungen liegen zumeist keine Feststoffpartikel vor. Prinzipiell ist es auch möglich, sedimentierende Dispersionen mit grösseren Partikeln herzustellen.

Die nach dem erfindungsgemässen Verfahren hergestellten Dispersionen können selbstverständlich noch weiter in bekannter Weise modifiziert werden beispielsweise durch Abmischen mit anderen Polyurethan- und/oder Polymer-Latices wie z.B. Polyacrylat-Dispersionen oder durch Zusatz von Vernetzern und/oder Hydrophobierungsmitteln wie z.B. Aldehyden, Melaminharzen, Epoxiden und Mono- oder Polyisocyanaten, die auch in verkappter Form vorliegen können.

Das erfindungsgemässe Verfahren ermöglicht eine Herstellung von Polyurethanpolyharnsstoffen in wässriger Phase und stellt so auch einen Weg dar, Produkte herzustellen, die auf Grund ihres hohen Hartsegmentanteils in Lösungsmitteln ausfallen würden. Solche harten Produkte eröffnen neue Einsatzgebiete insbesondere auf dem Finish- und Lacksektor. Darüber hinaus können nach diesem Verfahren hergestellte Dispersionen als Klebstoffe und Beschichtungen auf flexiblen und nichtflexiblen Substraten in Abhängigkeit von der Zusammensetzung des Polyurethans eingesetzt werden. Zu nennen wären z.B. die Lederzurichtung, Textilbeschichtung und Textilausrüstung, die Papierbeschichtung und das Lackieren von Holz, Metall oder Kunststoffen. Von Interesse ist z.B. auch das Imprägnieren von Schäumen und der Einsatz als Glasfaserschlichte(-zusatz).

Herstellung der in den Beispielen verwendeten salzartigen Addukte b) (Alle Prozentangaben beziehen sich auf Gewichtsprozente).

A) In einem 1-l-Metallkessel mit Wendelrührer werden 200 g Äthylenglykol und 100 g Hydrazin-Hydrat gemischt und so lange unter einem Druck von 0,5 bar mit Kohlendioxid umgesetzt, bis kein Kohlendioxid mehr aufgenommen wird (ca. 2-3 Stunden). Die entstehende Suspension wird über eine Drucknutsche abfiltriert. Der Filterkuchen wird zweimal mit Aceton gewaschen und sorgfältig über eine Drucknutsche abfiltriert.

Hydrazingehalt: 42% (Theorie: 42,1%, berechnet als $H_2N{-}NH_2 \cdot CO_2$)

Smp.: 89 °C

Statt Äthylenglykol können auch andere Lösungsmittel und insbesondere Alkohole, wie z.B. Methanol verwendet werden.

B) In einem 1-l-Sulfiertopf werden 200 g Hydrazin-Hydrat und 100 ml Methanol gemischt. Unter Kühlung werden 461 g 85%ige Phosphorsäure langsam zugetropft. Das ausgefallene Salz wird über eine Drucknutsche abgesaugt, zweimal mit jeweils 300 ml Aceton gewaschen und nochmal sorgfältig abgesaugt.

Hydrazingehalt: 19,5% (Theorie: 24,6%, berechnet als $H_2N{-}NH_2 \cdot H_3PO_4$)

Smp.: 115 °C

C) 180,3 g Äthylendiamin werden in 400 ml Aceton unter Eiskühlung in einem 3-l-Sulfierbecher vorgelegt. Es werden 309,7 g 95%ige Schwefelsäure langsam zugetropft. Das entstandene Salz wird zweimal mit Aceton gewaschen und über eine Drucknutsche sorgfältigst abfiltriert.

Feststoff: 100%

Smp.: > 310 °C

D) In einem 1-l-Sulfierbecher werden 126 g Oxalsäuredihydrat in 250 g Methanol vorgelegt und mit 75 g 80%igem Äthylendiamin unter langsamem Zutropfen neutralisiert. Der weisse Feststoff wird abgesaugt, mit Methanol gewaschen und im Ölpumpenvakuum getrocknet.

Äthylendiamingehalt: 24% (Theorie: 40%, berechnet als $H_2N{-}(CH_2)_2{-}NH_2 \cdot (HOOC)_2$)

Smp.: 195 °C

E) In einem 5-l-Sulfierbecher werden 876 g Adipinsäure in 2000 g Methanol aufgeschlämmt und unter Kühlen und Rühren mit 360 g Äthylendiamin in 100 g Methanol tropfenweise neutralisiert. Es wird 10 Minuten nachgerührt und über eine Glasnutsche abfiltriert. Der Rückstand wird dreimal mit je 1000 ml Aceton gewaschen. Der Feststoff wird sorgfältig über eine Drucknutsche abgedrückt.

Äthylendiamin-Gehalt: 28,2% (Theorie 29,1%, berechnet als $H_2N(CH_2)_2NH_2 \cdot HO_2C{-}(CH_2)_4{-}CO_2H$)

Smp.: 165 °C

F) In einem 1-l-Sulfierbecher werden 105 g Weinsäure in 210 g Methanol gelöst. Unter Kühlen und Rühren werden 89,2 g Hexamethylendiamin in 150 g Methanol zugetropft. Das ausfallende Salz wird über eine Glasnutsche abfiltriert, zweimal mit Methanol gewaschen und anschliessend im Ölpumpvakuum getrocknet.

Hexamethylendiamingehalt: 35,1% (Theorie: 43,6%, berechnet als

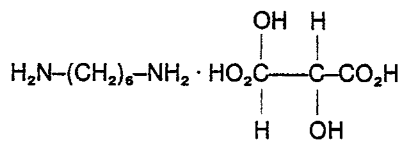

Smp.: 155 °C

G) In einem 1-l-Metallkessel mit Wendelrührer werden 200 g Hexamethylendiamin vorgelegt und auf 50 °C aufgewärmt. Unter Rühren wird das Amin bei einem Druck von 0,5 bar mit Kohlendioxid bis zur Sättigung umgesetzt. Es entsteht ein staubfreies Pulver.

Smp.: 133 °C

Hexamethylendiamingehalt: 73% (Theorie: 72,5%, berechnet als $H_2N{-}(CH_2)_6{-}NH_2 x CO_2$)

H) Wie G, aber statt Hexamethylendiamin werden 200 g Isophorondiamin (IPDA) eingesetzt, die bei 25–40 °C mit Kohlendioxid umgesetzt werden.

Smp.: 95 °C

IPDA-Gehalt: 80,5 (Theorie 79,4%, berechnet als IPDA · $CO_2$)

I) Eine Mischung von 424,7 g Isophorondiamin und 1500 g Aceton wird in einem 5-l-Sulfiertopf vorgelegt. In die Mischung werden unter Kühlen und Rühren 288 g 85%ige Phosphorsäure eingetropft. Das ausfallende Salz wird abgesaugt und zweimal mit jeweils 1000 ml Aceton gewaschen.

IPDA-Gehalt: 42,5% (Theorie 63,4%, berechnet als IPDA · $H_3PO_4$)

Smp.: 285 °C

Aceton-Gehalt: 31,0%

K) 200 g des Adduktes von Formaldehyd und Schwefeldioxid an N,N'-Dimethylharnstoff (SZ 147) werden in 80 g Wasser gelöst. Unter Kühlen und Rühren werden 55 g 4,4'-Diaminodicyclohexyl-methan ($H_{12}MDA$) gelöst in 110 g Methanol zugetropft. Das ausgefallene Salz wird abfiltriert. Der Filterkuchen wird noch zweimal in Methanol ausgeschlämmt und über eine Drucknutsche abfiltriert. Der Feststoff wird im Ölpumpenvakuum getrocknet. Smp.: 98 °C.

Beispiel 1

P —
- 540,0 g Butandiolpolyadipat (OHZ 50)
- 85,5 g eines aus Bisphenol A gestarteten Polypropylenglykol-Polyäthers (OHZ 197)
- 43,5 g eines auf Butanol gestarteten Polypropylenpolyäthylenglykolpolyäthers (Mol-Verh. Propylenoxid : Äthylenoxid 17 : 83, OHZ 26) (Dispergator)
- 63,6 g eines $NaHSO_3$-Adduktes an propoxyliertes Butendiol (OH-Zahl 261, 81,9%ig in Toluol)

210,3 g Hexamethylendiisocyanat (H)
22,1 g Hydrazincarbamat (Addukt A)
61,2 g Isophorondiamin-carbamat (Addukt H)
1520,0 g entsalztes Wasser.

Durchführung

Die Polyolmischung P wird unter Rühren im Vakuum bei 110 °C 30 Minuten entwässert, auf 80 °C abgekühlt und mit dem Isocyanat (H) bei dieser Temperatur so lange (ca. 6 Stunden) vermischt bis ein NCO-Gehalt von 6% erreicht ist. Dann werden die Addukte A und H zugegeben und ca. 15 Minuten bei ca. 60 °C vermischt. Anschliessend wird langsam das Dispergierwasser unter schnellem Rühren zugegeben.

Man erhält eine feinteilige Dispersion mit einer Fordbecherauslaufzeit (4 mm Düse) von 22,3 Sekunden bei einem Feststoff von 38,6%. Der pH-Wert der Dispersion beträgt 6. Der Film aus dieser Dispersion hat eine Zugfestigkeit von 21 MPa und eine Bruchdehnung von 685%. Die Shore A-Härte des Films beträgt 87.

Beispiel 2

P —
- 337,5 g Butandiol-polyadipat (OHZ 50)
- 31,7 g eines $NaHSO_3$-Adduktes an propoxyliertes Butendiol (OHZ 261, 81,9%ig in Toluol)
- 18,7 g eines auf Butanol gestarteten Polypropylenpolyäthylenglykolpolyäthers (Mol-Verh. Propylenoxid : Äthylenoxid 17 : 83, OHZ 26) (Dispergator)

80,0 g Aceton
139,8 g 4,4'-Diphenylmethan-diisocyanat (44)
13,3 g Hydrazincarbamat (Addukt A)
791 g entsalztes Wasser.

Durchführung

Die Polyolmischung p wird unter Rühren in Vakuum bei 110 °C 30 Minuten entwässert und auf 60 °C abgekühlt. Es wird Aceton zugegeben. Anschliessend wird die Mischung so lange bei ca. 60 °C mit dem Diisocyanat (44) verrührt, bis ein NCO-Wert von 4,8% erreicht ist. Anschliessend wird das Addukt A zugegeben und 15 Minuten verrührt. Danach wird das Präpolymer unter intensivem Rühren langsam mit Wasser dispergiert. Anschliessend wird das Aceton destillativ entfernt.

Man erhält eine sedimentationsstabile Dispersion mit einer Viskosität von 639 cP/25 °C bei einem Feststoffgehalt von 48,2%.

Der Film aus dieser Dispersion hat eine Zugfestigkeit von 31 MPa und einer Bruchdehnung von 850%. Die Shore A-Härte beträgt 71.

Beispiel 3

P —
- 179,3 g Äthylenglykol-Phthalsäure-Polyester (OHZ 288)
- 80,5 g Phthalsäure-Adipinsäure-Äthylenglykol-Polyester (OHZ 64,1)
- 23,2 g eines $NaHSO_3$-Adduktes an propoxyliertes Butendiol (OHZ 261; 81,9%ig in Toluol)
- 33,5 g eines auf Butanol gestarteten Polypropylenpolyäthylenglykolpolyäthers (Mol-Verh. Propylenoxid : Äthylenoxid 17 : 83; OHZ 26)

114,5 g Hexamethylendiisocyanat (H)
20,1 g Äthylendiamin-Adipat (Addukt E)
1100,0 g entsalztes Wasser (40 °C warm)
31,0 g Isophorondiisocyanat (IPDI)
76,7 g Formaldehyd (30%ig in Wasser)
17,1 g Monoäthylenglykol
1,4 ml Phosphorsäure (85%ig in Wasser).

Durchführung

Die Polyolmischung P wird 30 Minuten bei 110 °C im Vakuum entwässert. Bei 80 °C wird das Diisocyanat (H) zugegeben. Bei dieser Temperatur wird die Mischung gerührt, bis ein NCO-Gehalt von 2,4% gefunden wird. Die Schmelze wird auf 60 °C abgekühlt und mit dem Addukt E gemischt. Nach 15minutigem Rühren wird mit Wasser dispergiert, wobei langsam die Phosphorsäure zugegeben wird. Die Dispersion wird auf Raumtemperatur unter Rühren abgekühlt. Anschliessend wird des IPDI zugegeben. Es wird 3 Stunden bei 25–30 °C nachgerührt, anschliessend Formaldehyd zugegeben und 1 Stunde bei 55 °C gerührt. Nach dem Abkühlen auf Raumtemperatur wird Monoäthylenglykol eingerührt.

Man erhält eine sehr feinteilige Dispersion, die im durchscheinenden Licht einen Tyndall-Effekt aufweist. Die Fordbecherauslaufzeit (4 mm Düse) beträgt bei einem Feststoff von 35,9% 13,1 Sekunden. Der pH-Wert beträgt 6.

Die Dispersion ist als Appretur in der Lederzurichtung geeignet. Die Shore A-Härte des Films beträgt 76.

Beispiel 4

P– [
180,6 g Äthylenglykol-Phthalsäure-Polyester (OHZ 288)
80,5 g Phthalsäure-Adipinsäure-Äthylenglykol-Polyester (OHZ 64,1)
32,5 g eines auf Butanol gestarteten Polypropylenpolyäthylenglykolpolyäthers (Mol-Verh. Propylenoxid : Äthylenoxid 17 : 83, OHZ 26)
15,5 g eines $NaHSO_3$-Adduktes an propoxyliertes Butendiol (OHZ 261; 81,9%ig in Toluol)
]
112,1 g Hexamethylendiisocyanat
15,2 g Äthylendiaminoxalat (Addukt D)
1080,0 g entsalztes Wasser
30,2 g Isophorondiisocyanat
75,1 g Formaldehyd (30%ig in Wasser)
0,2 g Phosphorsäure (85%ig in Wasser).

Durchführung: vgl. Beispiel 3

Man erhält eine feinteilige Dispersion, die bei einem Feststoffgehalt von 29,4% eine Fordbecherauslaufzeit (4 mm Düse) von 12,5 Sekunden hat. Der pH-Wert beträgt 3,5.

Beispiel 5

Ansatz wie Beispiel 4, aber statt Äthylendiaminoxalat werden 13,3 g Äthylendiaminsulfat (Addukt C) eingesetzt. Auf die Phosphorsäure wird verzichtet.

Die erhaltene feinteilige Dispersion hat bei einem Feststoffgehalt von 29,2% eine Fordbecherauslaufzeit (4 mm Düse) von 11,3 Sekunden. Der pH-Wert beträgt 6.

Beispiel 6

Ansatz und Durchführung wie Beispiel 4, aber statt Äthylendiaminoxalat werden 19,9 g Hexamethylentartrat (Addukt F) eingesetzt.

Die erhaltene Dispersion zeigt im durchscheinenden Licht einen Tyndall-Effekt und hat bei einem Feststoffgehalt von 29,3% eine Fordbecherauslaufzeit (4 mm Düse) von 12 Sekunden. Der pH-Wert beträgt 4,9.

Beispiel 7

P– [
180,6 g Äthylenglykol-Phthalsäure-Polyester (OHZ 288)
80,5 g Phthalsäure-Adipinsäure-Äthylenglykol-Polyester (OHZ 64)
32,8 g eines auf Butanol gestarteten Polypropylenpolyäthylenglykolpolyäthers (Mol-Verh. Propylenoxid : Äthylenoxid 17 : 83; OHZ 26)
15,8 g eines $NaHSO_3$-Adduktes an propoxyliertes Butendiol (OHZ 261; 81,9%ig in Toluol)
]
112,2 g Hexamethylendiisocyanat
24,0 g Isophorondiamin-phosphat (Addukt I)
1100,0 g entsalztes Wasser
30,8 g Isophorondiisocyanat
76,7 g Formaldehyd (30%ig in Wasser)

Durchführung: vgl. Beispiel 3

Man erhält eine Dispersion, die im durchscheinenden Licht einen Tyndall-Effekt aufweist. Sie hat eine Fordbecherauslaufzeit (4 mm Düse) von 11,4 Sekunden bei einem Feststoffgehalt von 28,8%. Der pH-Wert beträgt 5. Der Film aus dieser Dispersion hat nach Auftrocknen bei Raumtemperatur eine Zugfestigkeit von 15 MPa bei einer Bruchdehnung von 500%. Seine Shore A-Härte beträgt 87. Die Dispersion ist zum Zurichten von Ledern geeignet.

Beispiel 8

270,0 g Butandiol-Polyadipat (OHZ 50)
45,8 g $NaHSO_3$-Addukt an propoxyliertes Butendiol (OHZ 261; 81,9%ig in Toluol) (A)
52,3 g Hexamethylendiisocyanat (H)
11,8 g Hexamethylendiamin-carbamat (Addukt G)
555,0 g entsalztes Wasser
1,2 g 85%ige Phosphorsäure.

Durchführung

Butandiol-adipat und Addukt (A) werden im Vakuum unter Rühren 30 Minuten bei 120 °C entwässert, anschliessend auf 70 °C abgekühlt, mit dem Diisocyanat (H) vermischt und so lange bei 80 °C verrührt (ca. 3 Stunden), bis ein NCO-Gehalt von 2,4% gefunden wird. Es wird das Addukt G zugegeben und 15 Minuten bei 60–70 °C verrührt. Anschliessend wird bei 60 °C mit 40 °C warmem Wasser dispergiert, wobei nach ca. 100 ml Wasser die Phosphorsäure zugegeben wird.

Man erhält eine feinteilige Dispersion mit einer Fordbecherauslaufzeit (4 mm Düse) von 65 Minuten bei einem Feststoffgehalt von 39,2%. Der pH-Wert beträgt 6.

Beispiel 9

200,0 g Adipinsäure-Phthalsäure-Äthylenglykol-Polyester (OHZ 64,1)
109,6 g Diäthylenglykol-Polyadipat (OHZ 41)
195,4 g Hexamethylendiisocyanat (H)
230,0 g Aceton
73,9 g N-Methyldiäthanolamin (N-MDA)
96,0 g Äthylendiaminphosphat (ADA-phosphat)
37,8 g Dimethylsulfat
1040,0 g $H_2O$.

Durchführung

Die beiden Polyester werden bei 120 °C im Vakuum unter Rühren 30 Minuten entwässert, auf 80 °C abgekühlt und mit dem Diisocyanat (H) bis zu einem NCO-Gehalt von 16,6% verrührt (ca. 30 Minuten). Es wird Aceton hinzugegeben und nach 10 Minuten das (N-MDA) eingerührt. Die Mischung reagiert bei ca. 50 °C 30 Minuten. Anschliessend werden das ADA-phosphat und das Dimethylsulfat nacheinander zugegeben. Es wird ca. 40 Minuten verrührt und anschliessend mit Wasser dispergiert. Das Aceton wird abdestilliert.

Man erhält eine sehr feinteilige Dispersion mit einer Viskosität von 1100 cp bei einem Feststoff von 41,5%. Der pH-Wert beträgt 4.

**Patentansprüche**

1. Verfahren zur Herstellung von wässrigen Dispersionen oder Lösungen von Polyurethan-Polyharnstoffen durch Umsetzung von chemisch eingebaute hydrophile Gruppierungen und/oder externe, nichtchemisch gebundene Emulgatoren enthaltenden, mindestens zwei freie Isocyanatgruppen aufweisenden Präpolymeren mit Kettenverlängerungsmitteln in wässriger Phase, dadurch gekennzeichnet, dass man

a) flüssige oder in in inerten Lösungsmitteln gelöster Form vorliegende, hydrophil modifizierte und/oder externe Emulgatoren enthaltende, Isocyanatgruppen aufweisende Präpolymere in Abwesenheit von Wasser mit

b) festen, in den Präpolymeren bzw. deren Lösungen unlöslichen Addukten, die einen über dem Schmelzpunkt der Präpolymeren oder deren Lösung liegenden Schmelzpunkt aufweisen, von

ba) mindestens zwei primäre und/oder sekundäre Aminogruppen aufweisenden Aminen und/oder Hydrazinen, welche an beiden Stickstoffatomen mindestens ein Wasserstoffatom aufweisen und

bb) anorganischen oder organischen Säuren bei einer Temperatur unterhalb des Schmelzpunkts des Addukts b) zu einer Suspension vermischt, und anschliessend diese Suspension mit Wasser oder mit wasserhaltigen flüssigen Systemen vermischt.

2. Verfahren gemäss Anspruch 1, dadurch gekennzeichnet, dass man solche Addukte b) verwendet, in welchen für jede =NH–Gruppe mindestens 0,5 Säureäquivalente gebunden vorliegen.

3. Verfahren gemäss Ansprüchen 1 und 2, dadurch gekennzeichnet, dass man die Mengenverhältnisse der Komponenten a) und b) so wählt, dass ein Äquivalentverhältnis zwischen Isocyanatgruppen des Präpolymeren zu zumindest teilweise unter Adduktbildung blockierten =NH–Gruppen von 4 : 1 bis 1 : 2 vorliegt.

4. Verfahren gemäss Ansprüchen 1 bis 3, dadurch gekennzeichnet, dass man als Komponente bb) Kohlendioxid verwendet.

5. Verwendung der gemäss Ansprüchen 1 bis 4 hergestellten wässrigen Dispersionen oder Lösungen zur Herstellung von Überzügen, Beschichtungen oder Verklebungen flexibler und nichtflexibler Substrate.

**Claims**

1. Process for the production of aqueous dispersions or solutions of polyurethane polyureas by reacting prepolymers containing at least two free isocyanate groups and chemically incorporated hydrophilic groups and/or external, chemically non-bound emulsifiers with chain-extending agents in the aqueous phase, characterised in that

a) isocyanate-group-containing prepolymers modified by the incorporation of hydrophilic groups and/or containing external emulsifiers are mixed in liquid form or in solution in inert solvents in the absence of water with

b) solid adducts, which are insoluble in the prepolymers or their solutions and have a melting point above the melting point of the prepolymers or their solutions, of

ba) amines containing at least two primary and/or secondary amino groups and/or hydrazines containing at least one hydrogen atom on both nitrogen atoms and

bb) inorganic or organic acids at a temperature below the melting point of the adduct b) to form a suspension and the suspension thus formed is subsequently mixed with water or with aqueous liquid systems.

2. Process according to Claim 1, characterised in that adducts b) are used which contain, bound therein, at least 0.5 acid equivalents for each =NH–group.

3. Process according to Claims 1 and 2, characterised in that the quantitative ratios between components a) and b) are selected in such a way that the equivalent ratio between isocyanate groups of the prepolymer and NH–groups at least partly blocked to form adducts amounts to between 4 : 1 and 1 : 2.

4. Process according to Claims 1 to 3, characterised in that carbon dioxide is used as component bb).

5. Use of the aqueous dispersions or solutions produced in accordance with Claims 1 to 4 for coating or bonding flexible and non-flexible substrates.

**Revendications**

1. Procédé pour la préparation de dispersions ou solutions aqueuses de polyuréthanne-polyurées par action en phase aqueuse de prépolymères présentant au moins deux groupes isocyanate libres, contenant des groupes hydrophiles chimiquement liés et/ou des émulsionnants externes non chimiquement liés, avec des agents d'allongement de chaînes, caractérisé en ce que l'on mélange en une suspension en l'absence d'eau

a) des prépolymères à groupes isocyanate, modifiés par des groupes hydrophiles et/ou contenant des émulsionnants externes, liquides ou sous forme dissoute dans des solvants inertes, avec

b) des produits d'addition solides, insolubles dans les prépolymères ou leurs solutions, présentant un point de fusion supérieur au point de fusion des prépolymères ou de leurs solutions, de

ba) des amines présentant au moins deux groupes amino primaires et/ou secondaires et/ou des hydrazines qui présentent au moins un atome d'hydrogène sur les deux atomes d'azote, et

bb) des acides inorganiques ou organiques à une température inférieure au point de fusion du produit d'addition b), et on mélange ensuite cette suspension avec de l'eau ou avec des systèmes liquides contenant de l'eau.

2. Procédé selon la revendication 1, caractérisé en ce que l'on utilise des produits d'addition b)

dans lesquels il y a pour chaque groupe =NH au moins 0,5 équivalents d'acide liés.

3. Procédé selon les revendications 1 et 2, caractérisé en ce que l'on choisit les proportions des composants a) et b) de telle sorte qu'il y ait un rapport d'équivalents entre les groupes isocyanate du prépolymère et les groupes =NH au moins partiellement bloqués avec formation de produit d'addition de 4 : 1 à 1 : 2.

4. Procédé selon les revendications 1 à 3, caractérisé en ce que l'on utilise comme composant bb) le dioxyde de carbone.

5. Utilisation des dispersions ou solutions aqueuses préparées selon les revendications 1 à 4 pour la préparation de revêtements, d'enduits ou de collages de supports flexibles et non flexibles.